# EUROPEAN PATENT APPLICATION

(11) **EP 3 893 130 A1**
(43) Date of publication of application: **13.10.2021**
(21) Application number: 18942086.2
(22) Date of filing: 10.12.2018
(51) Int. Cl.: G06F 17/00

(54) **SCALE-UP METHOD FOR METALLURGICAL PROCESS**

(30) Priority: 06.12.2018 CN 201811485574
(71) Applicant: Northeastern University, Shenyang, Liaoning 110819 (CN)
(72) Inventor: ZHANG, Tingan, Shenyang, Liaoning 110819 (CN); DOU, Zhihe, Shenyang, Liaoning 110819 (CN); LIU, Yan, Shenyang, Liaoning 110819 (CN); ZHANG, Zimu, Shenyang, Liaoning 110819 (CN); ZHAO, Qiuyue, Shenyang, Liaoning 110819 (CN); LV, Guozhi, Shenyang, Liaoning 110819 (CN); HE, Jicheng, Shenyang, Liaoning 110819 (CN)
(74) Representative: Gee, Steven William
(86) International application number: PCT/CN2018/119969
(87) International publication number: WO 2020/113593

(57) **Abstract**

An amplification method for a metallurgical process includes the following steps: determining a general rate equation by a metallurgical macrokinetics research method, and determining the most critical technology steps which affect a reaction rate to obtain reaction characteristics; determining physical field characteristics of a reactor to optimize the reactor by a physical simulation method and/or a numerical simulation method; according to the reaction characteristics and the physical field characteristics of the reactor, determining a single factor of a reaction period; according to an affection relationship in a metallurgical reaction process, determining a single factor amplification number; and solving pilot-scale test results by a hot state experiment or a simulation means, verifying an amplification criterion, obtaining an amplification scheme, performing industrialization, and completing metallurgical process amplification.

## Description

### BACKGROUND OF THE INVENTION

### 1. Field of the Invention

The present invention relates to the field of research and amplification of metallurgical and chemical equipment, and more particularly to an amplification method for a metallurgical process.

### 2. The Prior Arts

The green, large-scale, integrated and intelligent development of metallurgical industry not only requires a green metal extraction technology with no pollution, low energy consumption, short flow and good economy, but also requires large-scale metallurgical reaction equipment matching with the technology. Analysis and amplification for the metallurgical process provide important guarantee for smooth implementation of a production technology and increment of economic benefits of enterprises, and are also the only way to apply scientific research results from the laboratory stage to the industrial production. Due to imperfection of a scientific research system and lack of an analysis and detection technique, the amplification work of a traditional reactor often relies on personal experience of engineers to amplify equipment step by step, which causes the defects of being low in efficiency, time-consuming, labor-consuming, unreliable in an amplification scheme and the like. Moreover, the amplification scheme cannot be used even in similar reaction systems. With the development of science and technology, the chemical industry has made deep research on the equipment and put forward an amplification method through mathematical simulation. The method is based on material flow information in chemical equipment, and introduces mathematical analysis means such as differentiation or integration to construct a material flow balance equation in the equipment, so as to realize the amplification of the equipment. Although metallurgical industry has a similar unit operation process with the chemical industry, it also has obvious differences, such as characteristics of high temperature, high corrosivity, high voltage, high magnetic field, high electric field, complex physical properties of mediums and multi-field coupling. Therefore, the complexity of a metallurgical reaction system enables comprehensive, accurate and in-real measurement of effective data in the reactor to be challenging, and it is very difficult to establish an accurate mathematical model. Therefore, how to develop a metallurgical reactor amplification technique and method with metallurgical characteristics has become an urgent scientific problem to be solved.

The amplification of the metallurgical equipment needs to focus on an internal metallurgical chemical reaction process and a physical transfer process, and metallurgical reaction engineering is to analyze the process generated in a metallurgical reactor according to a reaction rate theory and a transfer process theory respectively, so as to clarify the reactor characteristics, determine the reaction operation conditions, strive to control the reaction process according to the best state, and finally, obtain comprehensive technical and economic benefits. Therefore, metallurgical reaction engineering is also called the analysis and amplification science of the metallurgical reactor.

From the perspective of metallurgical reaction engineering, the amplification process of the metallurgical reactor is analyzed, and it is found that during the size amplification process of the reactor, the rule of chemical reaction does not change, and the scale change of the equipment and mediums (such as bubbles, droplets and particles) involved in the reaction mainly affect the physical processes such as flowing, heat transfer and mass transfer. Therefore, what really changes with the scale is not the rule of chemical reaction but the rule of the physical transfer process. Therefore, for the metallurgical reactor, what needs to be tracked and investigated is actually the rule of the transfer process and the coupling effect between the rule of the transfer process with the rule of the chemical reaction. However, in an conventional step-by-step empirical amplification method and a mathematical model amplification method used in the amplification process of the reactor, research on the reaction characteristics in the reactor, the reactor characteristics and the coupling dependence between the reaction characteristics in the reactor and the reactor characteristics are unclear, which leads to mismatch between the reaction characteristics after actual amplification and the reactor characteristics, and has become a technical bottleneck restricting the reliable and efficient amplification of the reactor.

The present invention provides a metallurgical process adaptation and amplification concept, not only can deep analysis of the reaction process be guaranteed from the mechanism, but also establishment of complex mathematical models is avoided, so that the application range is wider, and the practical application is simpler and more convenient.

### SUMMARY OF THE INVENTION

In order to overcome defects and insufficiency of a traditional step-by-step empirical amplification method and a mathematical model method, a primary objective of the present invention is to provide an amplification method for a metallurgical process based on the principles of "adaptation theory" and "single factor". The method is wide in application range and more convenient in practical application.

To achieve the above objectives, the present invention provides an amplification method for a metallurgical process comprising the following steps:
step I, determining a relationship between a metallurgical reaction process and a pressure, a concentration, and a temperature by a metallurgical macrokinetics research method, wherein a relationship formula is: R=f(P, T, C, X), R represents a reaction rate of the metallurgical reaction process, f represents a functional relationship, P represents the pressure, T represents the temperature, C represents the concentration, and X represents other affecting factors, and determining the most critical technology steps which affect the reaction rate in the metallurgical reaction process to obtain reaction characteristics;
step II, determining physical field characteristics of a reactor to optimize the reactor by a physical simulation method and/or a numerical simulation method, and determining the reactor and a structure thereof suitable for metallurgical reaction characteristics;
step III, according to the reaction characteristics determined in the step I and the physical field characteristics of the reactor determined in the step II, determining a single factor of a reaction period, wherein the single factor is a decisive factor existing in a specific metallurgical reaction period;
step IV, according to the determined single factor, and an affecting relationship of the single factor on the metallurgical reaction process, determining a single factor amplification number; and
step V, according to an amplification criterion that the single factor amplification number remains unchanged in an amplification process, solving pilot-scale test results by a hot state experiment or a simulation means, verifying the amplification criterion, obtaining an amplification scheme, performing industrialization, and completing metallurgical process amplification.

In the step I, the determined relationship between the metallurgical reaction process and the temperature, the pressure, the concentration or other factors is irrelevant to the structure of the reactor, and is only related to a certain key factor in a specific time period.

In the step I, in the metallurgical macrokinetics research method, one method or a combination of several methods including differential thermal analysis, thermogravimetric analysis, differential scanning calorimetry, particle concentration measurement and component analysis can be selected to obtain a general rate equation, namely R=f(P, T, C, X), and a reaction control step is determined.

In the step II, physical fields of the reactor comprise pressure field, flow field, concentration field, magnetic field, stirring physical field and other physical fields affecting the metallurgical reaction process.

In the step II, the reactor and the structure thereof suitable for metallurgical reaction characteristics are determined, and the physical field characteristics of the reactor and the structure thereof are required to correspond to requirements of metallurgical reaction rules in the metallurgical process amplification.

In the step II, the physical simulation method and the numerical simulation method are used to determine the physical field characteristics of the reactor; wherein the physical simulation method is particle velocimetry, high-speed photography, Doppler and infrared imaging, and a water model experiment is obtained; and wherein the numerical simulation method is detailed simulation obtained by ANSYS/FLUENT simulation.

In the step II, according to the physical simulation method and the numerical simulation method, a material transmission rule is obtained, and a phenomenological equation is determined according to phenomenology.

In the step III, the single factor is a decisive factor which needs to exist in a specific metallurgical reaction period.

In the step IV, determination of the single factor amplification number is a single factor amplification criterion based on the single factor which can be established in a specific period for metallurgical process amplification.

In the amplification method for the metallurgical process provided by the present invention, determination of the reactor and the structure thereof suitable for metallurgical reaction characteristics and determination of the single factor are established on the basis of a metallurgical process amplification research platform coupled with the metallurgical macrokinetics research method, the physical simulation method, the numerical simulation method and the hot state experiment for verification, and the metallurgical process amplification can be accurately completed according to the steps of the amplification method for the metallurgical process.

According to the amplification method for the metallurgical process provided by the present invention, determining key control links of the metallurgical reaction process in the step I, belongs to a macro level, such as external diffusion; in the step III, the "single factor" in the control link is further determined to clarify which factor is the key factor of the specific stage for the reaction. Compared with a traditional step-by-step empirical amplification method and a traditional mathematical model method, the technical scheme has the following characteristics and advantages:

Firstly, the present invention provides a concept of "adaptive amplification", solves the technical problem that when the conventional amplification method is used for reactor amplification, the failure of amplification caused by mismatch between the reaction features and the reactor features occurs after actual amplification because the reaction characteristics in the reactor and the reactor characteristics and interaction rules are unclear.

The metallurgical reaction process comprises two parts: chemical reaction and physical transmission. The essence of the chemical reaction means that ways and rules of the metallurgical chemical reaction are not changed in specific physical environment. For example, initial reaction temperature of coal combustion, sulfide ore decomposition and the like is fixed under normal pressure. However, the same chemical reaction has different conversion effects, reaction rates and even reaction products in different reaction equipment, operating conditions and equipment of different scales. Due to differences of the reaction environment provided by reactors with different structural features, the difference of a material transfer process is caused, and further, the difference of chemical reaction results is caused. Therefore, a core idea of metallurgical process amplification is to ensure that the physical environment in metallurgical equipment after amplification matches the environment required by the chemical reaction, thereby realizing reliable metallurgical process amplification.

Secondly, the present invention provides a principle of "single factor", which can grasp the main contradictions in the metallurgical process, find the leading and decisive affecting factors under a complex metallurgical system, simplify the establishment of the amplification criterion, and solve the problem that the mathematical model is difficult to establish.

The metallurgical process is often a reaction process involving many materials participating in reaction, complex reaction pathways, and multi-phase coexistence. Therefore, it is very difficult to construct accurate mathematical equations. The present invention provides the principle of "single factor", which can grasp the leading and decisive affecting factors in the metallurgical process, usually controls the reaction rate and controls the change of the physical field, thereby simplifying the metallurgical process. For example, in the diffusion-controlled reaction process, the rule of stirring factors for change of chemical reaction and physical flow fields is explored; in the reaction controlled by chemical reaction, the affecting rule of temperature field change and interphase contact area change on the reaction is explored; and the product morphology has certain requirements, and affecting of external force distribution is explored, so as to discover the "single factor" of the process.

Thirdly, a research method coupling the metallurgical macrokinetics method, the physical simulation method, the numerical simulation method and the hot state experiment for verification is established, so that deep analysis of the reaction process from the mechanism can be guaranteed, establishment of complex mathematical models can be avoided, and the amplification method has a wider application.

### BRIEF DESCRIPTION OF THE DRAWINGS

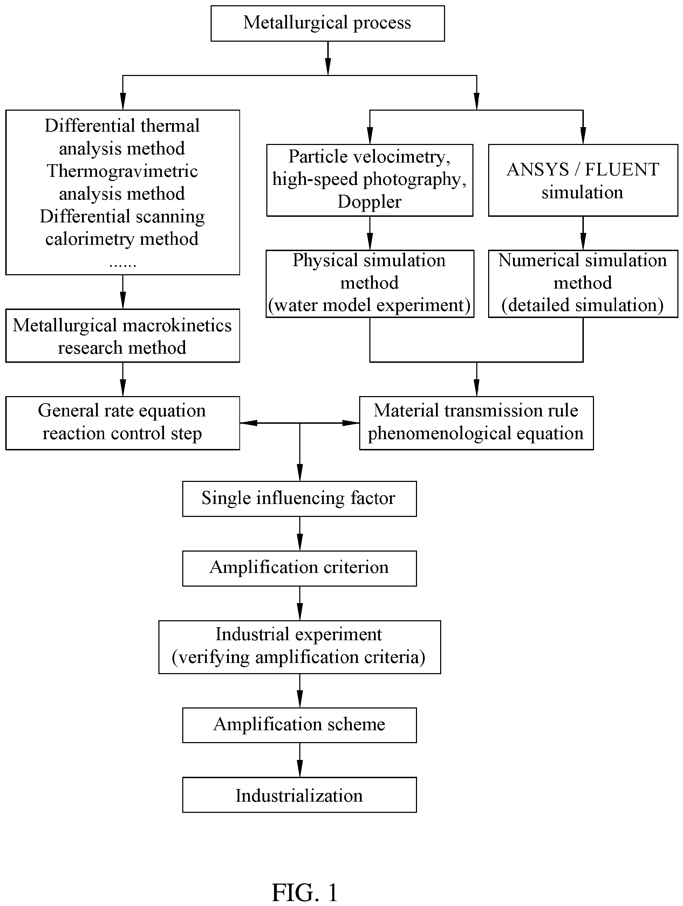

Fig. 1 shows a schematic diagram of a metallurgical process amplification research platform and a metallurgical process amplification flow according to the present invention.

### DETAILED DESCRIPTION OF THE PREFERRED EMBODIMENT

The present invention will be further described in detail with reference to the embodiments below.

### Embodiments

A metallurgical process amplification research platform and a metallurgical process amplification flow are shown in Fig. 1. The present invention is to provide an amplification method for a metallurgical process comprising the following steps:
Step I, on the basis of metallurgical macrokinetics research method, by one method or a combination of several methods including differential thermal analysis, thermogravimetric analysis and differential scanning calorimetry, through consideration of a transmission effect of materials, rules or characteristics of metallurgical macro-chemical reaction are explored, a quantitative relationship between an efficiency of chemical reaction and several affecting factors is investigated, and a general rate equation of the metallurgical reaction between different factors and reaction effects is established, namely R=f(P, T, C, X), wherein R represents a reaction rate of a metallurgical reaction process, f represents a functional relationship, P represents a pressure, T represents a temperature, C represents a concentration, and X represents other affecting factors. The main links controlling the reaction rate in the metallurgical reaction process are defined, and reaction characteristics are obtained.
Step II, a physical simulation method and a numerical simulation method are used to analyze the reactor characteristics. Particle velocimetry, high-speed photography, infrared imaging and Doppler are used to analyze the distribution of physical fields such as temperature field, velocity field and concentration field in a physical model. For more detailed analysis, an ANSYS numerical simulation method can be used to analyze a change rule of the physical field from multiple perspectives, and construct the physical field characteristics of reactors with different scales, structures and operations, so as to obtain a reactor and a structure thereof suitable for metallurgical reaction characteristics, and establish phenomenological equations of feature parameters (such as temperature, pressure, concentration and velocity) of the physical field and operating and structural conditions.
Step III, according to the reaction characteristics determined in the step I and the physical field characteristics of the reactor determined in the step II, a key contradiction- "single factor" in the metallurgical chemical reaction and the material transfer process is determined. In metallurgical macrokinetics research method, limiting steps in metallurgy are divided into physical transfer control, chemical reaction control, and physical transfer and chemical reaction mixed control. On the basis of metallurgical macrokinetics research method and analytical study of "physical field", the principle of the single influencing factor focuses on research on the affecting rule of change of physical factors on metallurgical chemical reaction and mass transfer effect, so as to find a decisive single physical factor which controls the overall chemical reaction rate in various physical fields.
Step IV, according to the affecting of the single factor on the metallurgical reaction process, a single factor amplification number is obtained.
Step V, according to an amplification criterion that the single factor amplification number remains unchanged in an amplification process, the amplification criterion is constructed. For example, through metallurgical macrokinetics research method, it is found that the metallurgical process is controlled by diffusion, so that the principle of the single influencing factor focuses on the diffusion process of reactants, and studies the affecting rule of key parameters such as stirring speed, stirring type and stirring structure on material diffusion, a decisive stirring number is found and the amplification criterion is constructed.
Step VI, the amplification criterion is constructed and tested. The quantitative relationship among the "single factor", the chemical reaction rate and the "physical field" is explored, a mathematical equation among the "single factor", the operation and a reactor size is established, and a result after reactor amplification is predicted through the equation. Through a numerical simulation method or a hot state experiment, an amplified production model is constructed, the chemical reaction and physical transfer results are calculated, and the amplification criterion is verified.

### Embodiment I

In the embodiment, a "thin material principle" is introduced, and an amplification method with temperature effect as a main contradiction in a metallurgical reaction process is established.

The specific flow is as follows: boron-enriched slag is boron-containing waste slag produced through blast furnace ironmaking, wherein a boron content is about 12%, and the boron-enriched slag is an ideal raw material for industrial boron extraction. However, the boron-enriched slag obtained at high temperature has low activity after being cooled, so that the boron-enriched slag is not suitable for being used as raw materials for boron extraction.

In the embodiment, the amplification method for the metallurgical process comprises the following steps:
Step I, a relationship between a metallurgical reaction process and a temperature of the boron-enriched slag at different cooling rates is analyzed by chemical component analysis from the perspective of metallurgical macrokinetics research method. A relationship formula is: η_{B}=61.21+1.25ΔT (ΔT varies from 2°C/min to 20 °C/min), whereinη_{B} is an utilization rate of the boron-enriched slag after being cooled, and ΔT is a temperature gradient during cooling.
   According to the relationship formula, it is found that temperature has great influence on a reaction rate of the metallurgical reaction process of the boron-enriched slag. According to orthogonal experiment, phase changes in the boron-enriched slag under different cooling temperatures and cooling rates are determined. It is found that a main contradiction in a cooling process of the boron-enriched slag is a competitive precipitation of magnesium borate, forsterite and glass phase caused by temperature effect. Therefore, the cooling temperatures and the cooling rates are the most critical technology steps in the metallurgical reaction process of the boron-enriched slag.
Step II, according to a physical simulation method of a cooling temperature field, an industrial-scale slow cooling tank (tank size: 1500 mm × 900 mm ×150 mm) and a slow cooling furnace (furnace size: 4524 mm × 2488 mm × 2065 mm) are determined.
Step III, according to the cooling temperatures and the cooling rates determined in the step I as the most critical technology steps in the metallurgical reaction process of the boron-enriched slag, and the physical field characteristics of the reactor determined in the step II, the temperature is determined as a single factor.
Step IV, according to the phase change features of a cooling process, namely two-stage slow cooling features, that is, the boron-enriched slag is rapidly cooled at a rate greater than 10 °C/min in a range of 1500 °C-1200°C, and slowly cooled at a rate less than 3 °C/min below 1200°C, so that the magnesium borate can be selectively precipitated. Therefore, a "thin material principle", Fo number (a relative size of an internal temperature propagation depth and a feature size of an object) and Bi number (a relative size of internal heat conduction resistance and internal heat release resistance of the object) are introduced.
Step V, based on the Fo number and the Bi number, a cooling model of temperature change in a melt during the cooling process is established. Finally, a principle of slow cooling amplification of the boron-enriched slag is determined, that is, the boron-enriched slag needs to be cooled in a form with a thickness less than 0.15 m, namely slow cooling in a form of "thin material" to ensure an extraction rate of boron. Therefore, in an equipment amplification process, a preheating temperature is 700 °Cto 900°C, a thickness of a slag layer is less than 0.15 m, an ambient temperature of a quick cooling stage is 600 °Cto 900°C, and an ambient temperature of a heat preservation stage is 780 °Cto 980°C, which can ensure an efficient extraction of the boron. The results of industrial amplification experiment show that an average activity of the boron in the boron-enriched slag is 80.0%, which is 5% higher than a specified index. A temperature distribution in the slow cooling tank predicted by an amplification criterion is consistent with a temperature actually measured in industry.

### Embodiment II

In the embodiment, an amplification method with concentration distribution effect as a main contradiction under a solid-liquid mechanical stirring system is established, and an amplification method of a seed precipitation tank of alumina is invented.

The specific flow is as follows: seed decomposition of a sodium aluminate solution is one of the key working procedures of alumina production by a Bayer method, which not only affects the quantity and the quality of alumina products, but also directly affects cycle efficiency and other working procedures. The seed decomposition is a process of precipitation of solid aluminum hydroxide from the sodium aluminate solution, which is a solid-liquid two-phase reaction. Mechanical stirring introduced not only can ensure an uniformity of solid particle distribution, but also ensure an uniformity and a stability of liquid phase concentration and reaction temperature in a reaction system. Through a means combining the physical simulation method and the numerical simulation method, a fluid flow state and a liquid-solid mixing state of a liquid-solid multiphase system in a seed precipitation tank are analyzed. It is found that a sedimentation problem appears at a bottom of the seed precipitation tank due to affecting of the structure, operation and the like of a stirring paddle, which enables a yield and a quality of alumina to be reduced in the subsequent stage. Therefore, the main contradiction in the amplification process of the seed precipitation tank is how to ensure uniform distribution of precipitated solid particles without accumulation effect of excessive local concentration.

In the embodiment, the amplification method for the seed precipitation tank of alumina, comprises the following steps:
Step I, a concentration distribution rule of the particles in the seed precipitation tank under different working conditions is measured by a particle concentration measuring instrument, and a relationship formula Q=0.57Fr^{-0.34} is obtained, wherein Q is bottom uniformity and Fr is Froude number. According to the relationship formula, the inventor finds that when a speed of the stirring paddle gradually increases, solid particles gradually suspend in the solution, and a deposition phenomenon at the bottom of the seed precipitation tank can be avoided, that is, the speed of the stirring paddle is the key factor affecting the seed precipitation process.
Step II, through a means combining the physical simulation method and the numerical simulation method, the physical field characteristics of the fluid flow state and the liquid-solid mixing state of a liquid-solid multiphase system in the seed precipitation tank are analyzed, and the amplified seed precipitation tank and the structure thereof are determined. The amplified seed precipitation tank is a flat-bottomed mechanical stirring tank with a diameter of 14 m, a height of 30 m and an effective volume of 4500 m³.
Step III, according to the reaction characteristics determined in the step I and the physical field characteristics of the reactor determined in the step II, a single factor of the reaction is determined as critical suspension speed.
Step IV, according to the relationship between a solid particle concentration and the critical suspension speed in the step III, the amplification number with the critical suspension speed as a core affecting factor is constructed: Nⱼₛ=Nⱼₛ₀ η^{-0.868}, wherein Nⱼₛ is the critical suspension speed after amplification, Nⱼₛ₀ is the critical suspension speed before amplification for the seed precipitation tank, and η is a volume multiple of amplification for the seed precipitation tank.
Step V, according to distribution characteristics of the solid particle concentration and a change rule of the critical suspension speed along with a size change of the seed precipitation tank, an amplification criterion is constructed, and high-magnification rapid amplification from a small-scale seed precipitation tank for laboratory to the 40,000-ton seed precipitation tank for industry is realized. After amplification, a power consumption of the seed precipitation tank is reduced by 31.2% compared with that of the conventional seed precipitation tank.

### Embodiment III

In the embodiment, an amplification method with energy distribution effect as a main contradiction is established under a metallurgical reaction system with complex reaction mechanisms, multiple phases and coupling of various physical fields.

The specific flow is as follows: as an important raw material of battery materials, spherical nickel hydroxide is widely used in electronic energy, electroplating, aerospace, military industry and other important fields. An amplification difficulty of a synthesis kettle of the spherical nickel hydroxide is in the complex mechanisms of synthesis reaction, the reaction process is multiphase reaction in which solid crystals are generated in liquid phase, and the reaction process involves coupling of various physical fields such as concentration distribution, temperature distribution, residence time distribution, stirring intensity and velocity distribution. At the same time, a sphericity of nickel hydroxide products affects the charging and discharging performance of subsequent batteries, so that strict requirements for morphology of products exist.

In the embodiment, the amplification method for the metallurgical process comprises the following steps:
Step I, through an actual production process, the inventor finds that the stirring in the system is in a state of over-stirring, and the solid-liquid two-phase distribution and temperature are uniform, so that a concentration effect and a temperature effect are eliminated. According to a growth theory of crystal, a growth time of the crystal and an intensity of stirring energy are important factors affecting a growth habit and morphology of the crystal. The residence time distribution of materials in the synthesis kettle under different working conditions is measured by a stimulus-response method, and the inventor finds that the residence time under different working conditions has little difference. Furthermore, turbulent kinetic energy distribution in the synthesis kettle under different working conditions is compared, and the inventor finds that the intensity of the stirring energy has an important influence on the growth habit and morphology of nickel hydroxide crystal. Therefore, the technique disclosed by the present invention determines that a single factor affecting the product quality and productivity is the intensity of the stirring energy.
Step II, through a means combining the numerical simulation method and the physical simulation method, the residence time of product particles in the synthesis kettle under different reactor structures and stirring force fields is constructed, and the flow field distribution, concentration distribution and temperature distribution in the reactor are measured at the same time by a particle velocimetry, a particle concentration analyzer and the like. A relationship between a fluid flow state and an energy consumption in reactors with different structures is simulated, and the types and the structures of the reactors in the reaction process are determined. A diameter of the synthesis kettle is 2.4 m, a ratio of height to diameter is 1.1, and a nominal volume is 10.51 m³.
Step III, according to the reaction characteristics determined in the step I and the physical field characteristics of the reactor determined in the step II, the single factor of a reaction period is determined as constant linear velocity.
Step IV, according to the determined single factor and affecting of the single factor on the metallurgical reaction process, a single factor amplification number is determined as U_{E} being greater than or equal to 7 m/s, wherein U_{E} is a linear velocity at one end of a stirring paddle.
Step V, the constant linear velocity is established as an amplification criterion and is verified by an experiment, and high-magnification rapid amplification from laboratory 150 L to industrial 10 m³ is realized.

## Claims

1. An amplification method for a metallurgical process, comprising the following steps:
step I, determining a relationship between a metallurgical reaction process and a pressure, a concentration, and a temperature by a metallurgical macrokinetics research method, wherein a relationship formula is: R=f(P, T, C, X), R represents a reaction rate of the metallurgical reaction process, f represents a functional relationship, P represents the pressure, T represents the temperature, C represents the concentration, and X represents other affecting factors, and determining the most critical technology steps which affect the reaction rate in the metallurgical reaction process to obtain reaction characteristics;
step II, determining physical field characteristics of a reactor to optimize the reactor by a physical simulation method and/or a numerical simulation method, and determining the reactor and a structure thereof suitable for metallurgical reaction characteristics;
step III, according to the reaction characteristics determined in the step I and the physical field characteristics of the reactor determined in the step II, determining a single factor of a reaction period, wherein the single factor is a decisive factor existing in a specific metallurgical reaction period;
step IV, according to the determined single factor, and an affecting relationship of the single factor on the metallurgical reaction process, determining a single factor amplification number; and
step V, according to an amplification criterion that the single factor amplification number remains unchanged in an amplification process, solving pilot-scale test results by a hot state experiment or a simulation means, verifying the amplification criterion, obtaining an amplification scheme, performing industrialization, and completing metallurgical process amplification.

2. The amplification method according to claim 1, wherein in the step I, the determined relationship between the metallurgical reaction process and the temperature, the pressure, the concentration or other factors is irrelevant to the structure of the reactor, and is only related to a certain key factor in a specific time period.

3. The amplification method according to claim 1, wherein in the step I, in the metallurgical macrokinetics research method, one method or a combination of several methods including differential thermal analysis, thermogravimetric analysis, differential scanning calorimetry, particle concentration measurement and component analysis can be selected to obtain a general rate equation, namely R=f(P, T, C, X), and a reaction control step is determined.

4. The amplification method according to claim 1, wherein in the step II, physical fields of the reactor comprise pressure field, flow field, concentration field, magnetic field, stirring physical field and other physical fields affecting the metallurgical reaction process.

5. The amplification method according to claim 1, wherein in the step II, the reactor and the structure thereof suitable for metallurgical reaction characteristics are determined, and the physical field characteristics of the reactor and the structure thereof are required to correspond to requirements of metallurgical reaction rules in the metallurgical process amplification.

6. The amplification method according to claim 1, wherein in the step II, the physical simulation method and the numerical simulation method are used to determine the physical field characteristics of the reactor; wherein the physical simulation method is particle velocimetry, high-speed photography, Doppler and infrared imaging, and a water model experiment is obtained; and wherein the numerical simulation method is detailed simulation obtained by ANSYS/FLUENT simulation.

7. The amplification method according to claim 1, wherein in the step II, according to the physical simulation method and the numerical simulation method, a material transmission rule is obtained, and a phenomenological equation is determined according to phenomenology.

8. The amplification method according to claim 1, wherein in the step III, the single factor is a decisive factor which needs to exist in a specific metallurgical reaction period.

9. The amplification method according to claim 1, wherein in the step IV, determination of the single factor amplification number is a single factor amplification criterion based on the single factor which can be established in a specific period for metallurgical process amplification.

10. The amplification method according to claim 1, wherein determination of the reactor and the structure thereof suitable for metallurgical reaction characteristics and determination of the single factor are established on the basis of a metallurgical process amplification research platform coupled with the metallurgical macrokinetics research method, the physical simulation method, the numerical simulation method and the hot state experiment for verification, and the metallurgical process amplification can be accurately completed according to the steps of the amplification method for the metallurgical process.
